Europäisches Patentamt

European Patent Office

Office européen des brevets

(11) Publication number: **0 117 724**
**A2**

# EUROPEAN PATENT APPLICATION

(21) Application number: 84301173.5

(22) Date of filing: 23.02.84

(51) Int. Cl.³: **G 11 B 5/43**
// G11B5/09

(30) Priority: 25.02.83 GB 8305231

(43) Date of publication of application: 05.09.84
Bulletin 84/36

(84) Designated Contracting States: DE FR GB NL

(71) Applicant: **AUDIO & DESIGN (RECORDING) LIMITED,
North Street, Reading Berkshire RG1 7DA (GB)**

(72) Inventor: **Barton, Geoffrey James, Upton Lodge Cottage
Reading Road, Upton Nr. Didcot Oxon OX11 9HP (GB)**

(74) Representative: **Kirk, Geoffrey Thomas et al,
BATCHELLOR, KIRK & EYLES 2 Pear Tree Court
Farringdon Road, London EC1R 0DS (GB)**

(54) **Interchannel skew corrector for PCM signals.**

(57) A signal encoding, transmission or recording and decoding
system comprising a pair of signal channels; an analogue delay
device (1) at the input of a first one of said channels; an
analogue-to-digital converter (2) arranged to switch between
the channel inputs to sample them alternately; means (3) for
transmitting. recording or storing the coded signals; a digital to
analogue converter (4) arranged to receive the coded signals
and to switch between the channels so as to sample them alternately; and an analogue delay device (5) in the analogue output
of the second channel.

PCM PROCESSOR TYPE B

ACTORUM AG

-1-

## "Interchannel Skew-Corrector for PCM Signals."

This invention relates to stereo and multichannel digital audio recording and transmission systems, and is particularly concerned with the compatibility between signals on systems using different sampling conventions at the same sampling rate.

In pulse code modulation (PCM) recording and transmission the frequency band limited input audio signal is sampled at regular intervals and the amplitudes of those instantaneous samples are converted by an analogue-to-digital converter into a series of values which are recorded on tape or transmitted. The sampling rate is sufficiently high to ensure that no information within the pass-band of the audio signal is lost, and hence the original signal may be reconstructed by a digital-to-analogue converter (DAC) followed by a low-pass filter to interpolate to a continuous analogue signal.

When stereo signals are PCM converted there are two commonly used standards relating to the sampling operation.

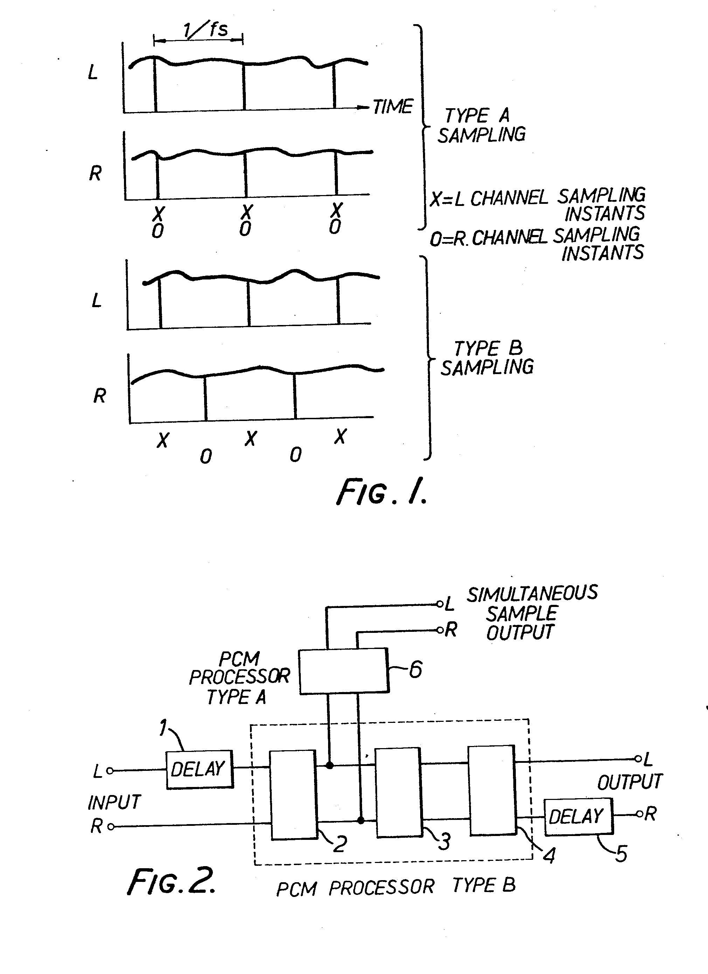

The first, (see Figure 1) used by digital recorders such as the Sony PCM1610 and implied by the playback standard of the Philips-Sony Compact Disc, is to sample the two channels simultaneously, usually followed by analogue-to-digital conversion in two separate ADCs. Similarly, on playback (or reception) each channel has a separate DAC which are updated simultaneously with samples which relate to the same instant.

The second scheme, particularly attractive for domestic or lower cost applications and as used in the Sony PCM-F1 and other EIAJ format machines, samples the two channels alternately. This makes it possible to use

-2-

a single ADC, although it must convert at twice the single channel sampling rate. On playback the DAC is updated alternately with either channels information, the analogue signal also being switched between channels, and hence the original sequence of the alternate samples is preserved.

Whilst the latter scheme has the advantage of reduced cost, it does have a disadvantage when recordings must be interchanged with those on machines using the simultaneous sampling standard. If the sampling rates of a simultaneous-sampling system (hereinafter referred to as "type A") and an alternate-sampling system ("type B") are synchronised, where synchronised means that the frequency is exactly the same and the sampling pulses of one channel of the type B system are coincident with those of the type A system, it is possible to transfer the digital signals directly between the machines even if the recorded or transmitted format is different. For instance, the Sony PCM1610 and PCM100 provide a directly compatible serial data link for this purpose.

However, if for instance transferring from a type B system to a type A system, the playback section of the type A system will digital-to-analogue convert the two channel samples simultaneously rather than alternately. This is equivalent to delaying one of the samples (either from the left or the right channel depending on the machine) by half the channel sampling period. The effect of this is to cause an interchannel phase error increasing with frequency. A similar effect is produced by transferring from type A to type B, except that the phase error has the opposite sign.

As an example, a tape recorded on the PCM-F1 recorder (EIAJ standard, "type B" alternating samples, sampling rate 44.1k samples/sec) if transferred to the

0117724

-3-

Compact Disc ("type A" simultaneous samples, 44.1k samples/sec) will exhibit an inter-channel phase error of nearly 82° at 20 kHz (41° at 10 kHz) on playback.

This error has two particular effects on audio quality, rather similar to the effects of azimuth mis-alignment on a narrow-gap stereo magnetic tape playback head.

In the case of two channel encoded surround sound or matrix quadraphony, the phase error causes image skewing at high frequencies. It may, under certain circumstances, become audible on ordinary stereo, particularly on headphones. Secondly, if the two channels are parallel for mono, the high frequency response will fall by about 2.4 dB at 20 kHz for a central image (for a 44.1 kHz sampling rate).

The problem could be overcome by digital signal processing. It would be necessary to interpolate between the samples of one channel and "resample" at the sampling instants of the other channel. At the moment this complex operation is expensive to do.

According to the present invention, therefore, there is provided a method of digitally encoding onto two output channels a pair of varying analogue electrical signals on corresponding input channels, comprising, sampling the signal on each of the two input channels once in a predetermined sampling period by using a single analogue-to-digital converter which is arranged to switch alternately between the two input channels so as to supply digital signals alternately to the output channels, the said method being characterised by the step of delaying the analogue signal in one of the input channels relative to the analogue signal in the other channel by a period equal to half the sampling period.

-4-

The invention also extends to apparatus for digitally encoding onto two output channels, a pair of varying analogue electrical signals on corresponding input channels comprising an analogue-to-digital converter arranged to sample the signal on each of the two input channels once in a predetermined sampling period by switching alternately between the two input channels so as to supply digital signals to the two output channels, characterised by analogue delay means in at least one of the input channels, arranged in one of the channels relative to the other channel to provide a delay equal to half the sampling period.

In this way, a signal which is being sampled in the "type B" mode, i.e. each channel sampled alternately, can be rendered compatible with a "type A" system since the samples will appear to have been taken simultaneously.

A preferred arrangement of the invention provides a signal encoding, transmission or recording and decoding system comprising a pair of signal channels; an analogue delay device at the input of a first one of said channels; an analogue to digital converter arranged to switch between the channel inputs to sample them alternately; means for transmitting, recording or storing the coded signals; a digital to analogue converter arranged to receive the coded signals and to switch between the channels so as to sample them alternately; and an analogue delay device in the analogue output of the second channel.

The preferred arrangement can therefore provide both digital outputs suitable for transmission recording or the like on a "simultaneous sampling" system (i.e. at a point downstream of the A to D conversion) and analogue outputs suitable for reproduction on an "alternate sampling" system (at the outputs downstream of the second delay device.

A preferred embodiment of the invention will now be described by way of example, with reference to the accompanying drawing, wherein:

Figure 1 is a diagram illustrating the two standard sampling conventions,

Figure 2 is a schematic block diagram of an apparatus according to an embodiment of the invention; and

Figure 3 is a circuit diagram of a delay line of the preferred embodiment of the invention.

The overall scheme is shown in Figure 2. As the most likely requirement is expected to be conversion from "type B" to simultaneous sampling machines such as the Compact Disc, the application of the invention to an alternate sampling machine will be used for example. The channels are labelled L and R but of course (as mentioned previously) there are two possible conventions for conversion to simultaneous sampling i.e. Ldelayed to meet R and R delayed to meet L. Here it is assumed that the R signal will be delayed to meet the L signal.

In Figure 2 the two input signals L and R form a stereo pair i.e. they contain information encoded such that the two signals have some relationship depending on the desired position of images in the stereo stage. Block 1 is a filter designed such that its phase response is substantially equivalent to a pure time delay over the audio band (e.g. 20 kHz) and its amplitude response substantially flat over the same band. If the system sampling rate is fs samples/second in each channel, then this time delay is designed to be 1/2fs seconds. The signals L and R then pass to the normal inputs of the PCM system where they are low pass filtered and sampled alternately at 2fs i.e. each channel is sampled at fs but with sampling pulses 1/2fs apart in time (block 2). The resulting digital signals are passed to the second digital machine (block 6). In this machine the R channel samples are automatically delayed by half the sampling period because the machine will only recognise simultaneous channel samples and reads the R signal samples as though they occurred at the same instants as the L samples. However, because the L samples have already been delayed by 1/2fs in the analogue delay line, the time coherence of the signal samples has now been restored and the digital signal samples L and R now represent the analogue signals input to L and R at the same instant.

Block (3) represents the digital encoding, recording and storage or transmission and decoding normally performed by a PCM processor, the signals at the outputs of block (3) being substantially equivalent to those at its inputs in respect of signal format. Block 4 contains the DAC and analogue low-pass filtering required to reconstitute the analogue signals.

A further feature of the invention is embodied in the inclusion of block (5). This is a second delay line similar to block (1) inserted to maintain self compatibility for tapes both recorded and played back or transmitted and received on the machine represented by blocks (2), (3) and (4).

It will be seen that the signal path through the processor consist of blocks (1), (2), (3) and (4) for channel L and (2), (3), (4) and (5) for channel R. Each channel therefore, contains an identical delay-line and hence inter-channel phase integrity is maintained for tapes recorded and played back on the same machine.

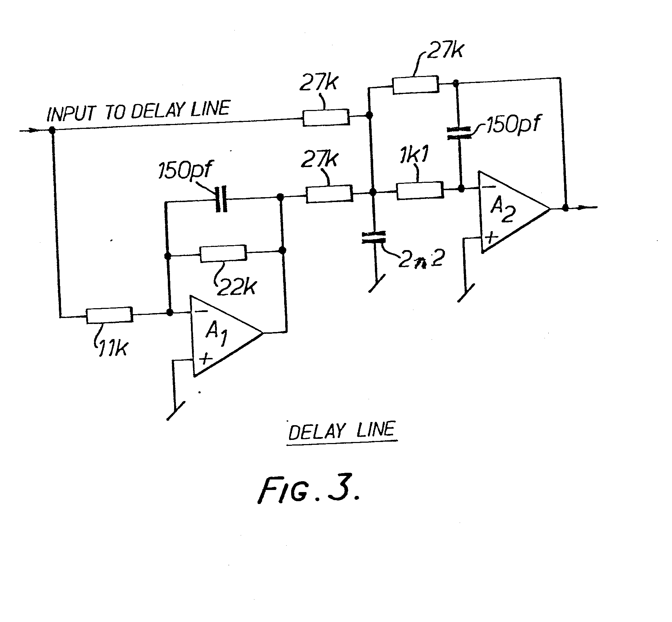

Figure 3 shows a practical implementation of the delay lines shown in Figure 2, having a pair of integrated circuit amplifiers $A_1$ and $A_2$ with resistive/capacitive feedback networks arranged to

-7-

provide the desired signal transmission characteristic.

It will be apparent that while in the preferred embodiment a single delay has been provided in one of the input channels, a delay could be provided in each, with a relative delay of half the sampling period between the two e.g. one channel could have a delay equal to three quarters of the sampling period while the other could have a delay equal to a quarter of the sampling period.

CLAIMS:

1.      A method of digitally encoding onto two output channels a pair of varying analogue electrical signals on corresponding input channels, comprising, sampling the signal on each of the two input channels once in a predetermined sampling period by using a single analogue-to-digital converter which is arranged to switch alternately between the two input channels so as to supply digital signals alternately to the output channels, the said method being characterised by the step of delaying the analogue signal in one of the input channels relative to the analogue signal in the other channel by a period equal to half the sampling period.

2.      Apparatus for digitally encoding onto two output channels, a pair of varying analogue electrical signals on corresponding input channels comprising an analogue-to-digital converter arranged to sample the signal on each of the two input channels once in a predetermined sampling period by switching alternately between the two input channels so as to supply digital signals to the two output channels, characterised by analogue delay means in at least one of the input channels, arranged in one of the channels relative to the other channel to provide a delay equal to half the sampling period.

3.      Apparatus for digitally encoding as claimed in claim 2 characterised in that the analogue delay means is an analogue delay device in one of the input channels, arranged to provide a delay equal to half the sampling period.

4.　　　　Apparatus for decoding a signal encoded on a apparatus according to claim 2 or 3, comprising a digital-to-analogue converter arranged to switch alternately between the two encoded signal channels, and an analogue delay device connected to one of the outputs of said converter.

5.　　　　A signal encoding, transmission or recording and decoding system comprising a pair of signal channels; an analogue delay device at the input of a first one of said channels; an analogue to digital converter arranged to switch between the channel inputs to sample them alternately; means for transmitting, recording or storing the coded signals; a digital to analogue converter arranged to receive the coded signals and to switch between the channels so as to sample them alternately; and an analogue delay device in the analogue output of the second channel.

6.　　　　A system according to claim 4 further comprising a pair of signal outputs connected to the output of said analogue-to-digital converter, for connection to the inputs of a recording system of the simultaneous sampling type.

FIG. 1.

FIG.2.

2/2

0117724

INPUT TO DELAY LINE

DELAY LINE

FIG.3.